(19) Europäisches Patentamt European Patent Office Office européen des brevets

(11) **EP 2 144 358 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(51) Int Cl.:
**H02M 3/335** *(2006.01)*

(21) Anmeldenummer: **08022223.5**

(22) Anmeldetag: **20.12.2008**

(54) **DC/DC-Wandler**

DC/DC-converter

Convertisseur CC/CC

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.07.2008 EP 08012365**

(43) Veröffentlichungstag der Anmeldung:
**13.01.2010 Patentblatt 2010/02**

(73) Patentinhaber: **SMA Solar Technology AG
34266 Niestetal (DE)**

(72) Erfinder:
- **Engel, Bernd Dr.
  38302 Wolfenbüttel (DE)**
- **Mallwitz, Regine Dr.
  34131 Kassel (DE)**
- **Zacharias, Peter Prof. Dr.
  34131 Kassel (DE)**

(74) Vertreter: **Walther, Walther & Hinz GbR
Heimradstrasse 2
34130 Kassel (DE)**

(56) Entgegenhaltungen:
**EP-A- 1 369 985       EP-A- 2 023 475
DE-B4-102004 037 446**

- **KLAASSENS J B: "Power Conditioning with a Switched Series-Resonant Circuit Operating at a High Internal Frequency" TELECOMMUNICATIONS ENERGY CONFERENCE, 1987. INTELEC '87. THE NINTH INTERNATIONAL, IEEE, PISCATAWAY, NJ, USA, 14. Juni 1987 (1987-06-14), Seiten 193-203, XP031432892 ISBN: 978-91-7810-916-6**
- **SEVERNS R: "Topologies for three element resonant converters" 19900311; 19900311 - 19900316, 11. März 1990 (1990-03-11), Seiten 712-722, XP010004735**

**Beschreibung**

Die Erfindung betrifft einen transformatorlosen resonant betriebenen DC/DC-Wandler zum Umwandeln einer unipolaren Eingangs-Gleichspannung.

Aus dem Stand der Technik sind transformatorlose Wechselrichter bekannt, die ein Hochsetzen der DC-Quellspannung ermöglichen. In der DE 10 2004 037 446 B4 ist ein solcher Wechselrichter beschrieben.

Diesem folgt ein DC/AC-Wandler in Form einer ein- oder mehrphasigen Brückenschaltung. Der Hochsetzsteller ermöglicht das Hochsetzen der DC-Eingangsspannung solange erforderlich. Bei Photovoltaik-Wechselrichtem muss die Eingangsspannung am DC/AC-Wandier nämlich höher sein als die Netzkuppenspannung, um in das Netz einspeisen zu können. Ist die DC-Duell-Spannung nicht so hoch, ist ein Hochsetzsteller geeignet, die Spannung auf den geforderten Wert hochzusetzen. Ist die DC-Quellspannung ausreichend hoch, ist der Hochsetzsteller inaktiv.

Von Nachteil sind die Leitend-Verluste der Hochsetzsteller-Dioden, die auch dann anfallen, wenn der Hochsetzsteller nicht aktiv ist. Diese Dioden liegen immer im Strompfad zwischen Quelle und DC/AC-Wandler.

Ein weiterer Nachteil des genannten Standes der Technik ist die fehlende Erdungsmöglichkeit für die Quelle.

Bei DC/DC-Wandlern, die nur einen Spannungseingang mit nur einem Pluspol und einem Minuspol aufweisen, die also keinen zusätzlichen Erdungsanschluss enthalten, muss im Fall einer eingangsseitigen Erdung entweder der Minuspol oder der Pluspol geerdet werden. Eine Erdung des Minuspols oder des Pluspols ist beispielsweise bei Photovoltalk-Modulen einer Photovoltaik-Anlage erwünscht. Vorteilhaft sind dabei Wandlerschaltungen, die eine Erdung am Spannungseingang ermöglichen. Besonders vorteilhaft ist es, wenn die Wandlerschaltung die Erdung an einem beliebigen Pol ermöglicht.

Die Erdung der DC-Quelle, insbesondere des Photovoltaik-Moduls einer Photovoltalk-Antage, beseitigt das Problem, dass bei transformatorlosen Wechselrichtern in Photovoltaik-Anlagen hohe kapazitive Ableitströme auftreten können. Diese Ableitströme sind zu verringern oder noch besser zu vermeiden. Transformatorlose Lösungen werden jedoch aufgrund des leichten Gewichts und der Kostenvorteile bevorzugt.

Zudem variiert bei Wechselrichtern mit angeschlossenen Photovoltaik-Generatoren die Eingangsspannung sehr stark. Auch unter diesen Bedingungen ist bei solchen Wechselrichtern in einem möglichst breiten Betriebsbereich ein günstiger Wirkungsgrad erwünscht.

Wie auch im Stand der Technik beschrieben, bestehen PhotovoltaikWechselrichter häufig aus mehreren Stufen, z.B. einem eingangsseitigen DC/DC-Wandler und einem DC/AC-Wandler.

Aus der Veröffentlichung KLAASSENS J B: "Power Conditioning with a Switched Series-Resonant Circuit Operating at a High Internal Frequency" TELECOMMUNICATIONS ENERGY CONFERENCE, 1987. INTELEC '87. THE NINTH INTERNATIONAL, IEEE, PISCATAWAY, NJ, USA, 14. Juni 1987 (1987-06-14), Seiten 193-203, XP031432892, ist ein bidirektionaler DC/OC-Wandler bekannt, bei dem eine Hochsetzfunktion über die Ansteuerung von Brückenschaltern erreicht wird.

Die EP 1 369 985 A zeigt und beschreibt einen DC/AC-Wandler bzw. eine Schaltung zum Umwandeln einer Gleichspannung in eine Wechselspannung, der nicht im Bereich einer Resonanzfrequenz betreibbar ist, da die Topologie keine Resonanzkapazität aufweist.

Der Erfindung liegt die Aufgabe zugrunde, einen transformatorlosen DC/DC-Wandler zu schaffen, der für Photovoltaik-Anlagen geeignet ist, einen hohen Wirkungsgrad aufweist und im Bedarfsfall ein stufenloses Hochsetzen oder Tiefsetzen der Eingangsspannung ermöglicht.

Die Lösung der Aufgabe ergibt sich aus dem Wortlaut des Anspruches 1.

Die Erfindung beruht auf dem Gedanken, einen resonant betriebenen, trafolosen DC/DC-Wandler bereitzustellen, der in einer Stufe auch das stufenlose Hochsetzen der Eingangsspannung übernimmt und dabei mit geringsten Verlusten, also hohem Wirkungsgrad arbeitet. Der DC/DC-Wandler kann Bestandteil eines Photovoltaik-Wechselrichters sein, aber auch für andere Anwendungen genutzt werden.

Die erfindungsgemäße Wandlerschaltung ist vorteilhaft, weil sie für eine Pluspol- oder Minuspol-Erdung geeignet ist, durch die diese flexible Erdung stets gesichert ist und somit keine kapazitiven Ableitströme entstehen können. Dies wird dadurch erreicht, dass die Kapazität(en) des Resonanzkreises eine Glelchspannungsisolation zwischen PV-Generator und Netzwechselrichter sicherstellen und der erfindungsgemäße resonante Wechselrichter bei Frequenzen arbeitet, die wesentlich höher sind als die Netzfrequenz. Außerdem ermöglichen ihr Resonanzbetrieb und die transformatorlose Ausführung ein geringes Gewicht und einen hohen Wirkungsgrad.

Die Forderung nach zusätzlicher Erhöhung des Wirkungsgrads wird durch den trafolosen Resonanzwandler in Kombination mit der zusätzlichen hochsetzenden Anordnung gelöst, die zwischen jeweils einem ResonanzKondensator und dem zugehörigen ausgangsseitigen Gleichrichter geschaltet ist. Eine hochsetzende Anordnung besteht aus mindestens einem Schalter. Jede zusätzliche hochsetzende Anordnung bildet zusammen mit der Resonanzinduktivität je einen Hochsetzsteller. Die Diode des Hochsetzstellers ist mindestens eine der Gleichrichter-Dioden oder mindestens eine Diode, die Bestandteil der hochsetzenden Anordnung ist.

Weitere vorteilhafte Ausgestaltungen der Erfindung sind den Unteransprüchen zu entnehmen.

Um den weiten Spannungsbereich zu sichern, ist der Betrieb sowohl im Grundmodus (Tiefsetzen) als auch im erfindungsgemäßen Hochsetzmodus zu ermöglichen. Ein Unterbrechen der Schaltvorgänge stoppt den Energiefluss zwischen PV-Generator und Netz durch die Isolation des Schwingkreiskondensators. Durch die erfindungsgemäße Anordnung der Bauelemente und Ansteuerung der Schalter werden die Schaltverluste beim Einschalten und Ausschalten der Schalter signifikant gegenüber bekannten Anordnungen reduziert.

Anhand der Zeichnungen wird die Erfindung nachstehend beispielhaft näher erläutert.

| | |
|---|---|
| Fig. 1-3 | zeigen die Grundschaltungen des transformatorlosen resonant betriebenen DC/DC-Wandlers mit den verschiedenen Erdungsmöglichkeiten für den DC-Eingang; |
| Fig.4a-4c | zeigen den transformatorlosen, resonant betriebenen DC/DC-Wandler nach Fig.1 mit den erfinderischen hochsetzenden Anordnungen in Prinzipdarstellung mit den entsprechenden Signalverläufen; |
| Fig. 5 | zeigt die Erweiterung des in Fig. 4 dargestellten Prinzips einer höheren Spannungsübersetzung als in Fig. 4a; |
| Fig. 6 und 7 | zeigen Ausführungsformen für eine niedrigere Spannungsübersetzung als in Fig. 4a mit identischer Schalterzahl wie in Bild 4a; und |
| Fig. 8a-8c | zeigen eine Ausführungsform der erfindungsgemäßen Schaltungsanordnung mit nur drei aktiven Schaltern zusammen mit den zugehörigen Signalverläufen. |

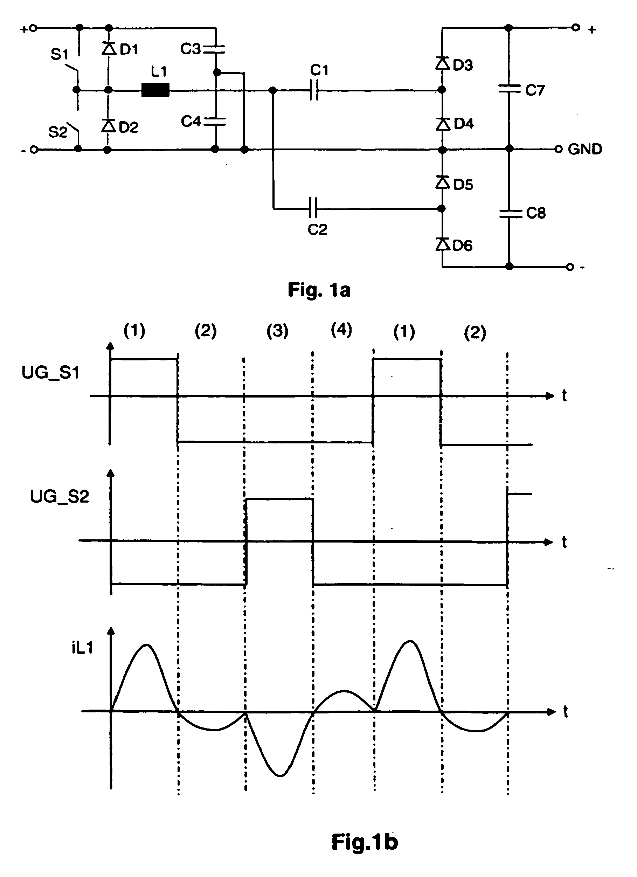

In Fig. 1 ist die Grundschaltung des resonant schaltenden DC/DC-Wandlers mit geerdetem Minuspol der DC-Quelle ohne die zwischengeschalteten, hochsetzenden Anordnungen dargestellt.

Es kann ein Photovoltaik-Generator oder eine andere DC-Quelle angeschlossen werden. Dabei sind verschiedene Erdungsmöglichkeiten der DC-Quelle möglich. So kann der Photovoltaik-Generator zum Beispiel am Pluspol oder am Minuspol geerdet sein. Auf eine Erdung kann auch verzichtet werden. Entsprechend wird die Schaltung verändert.

Die Schaltung besteht aus einer Halbbrücke mit zwei Zweigen. Der erste Zweig besteht aus den zwei Schaltern S1, S2 und ihren antiparallelen Dioden D1, D2. Der zweite Zweig besteht aus den zwei in Reihe geschalteten Kondensatoren C3, C4.

In Fig. 1a ist der Kondensator C4 überbrückt und zwischen dem Verknüpfungspunkt der beiden Kondensatoren C3, C4 und GND besteht eine Verbindung. Damit ist der Minuspol der DC-Quelle geerdet.

Ein Resonanzkreis ist mit dem Verknüpfungspunkt der Schalter S1, S2 verbunden. Der Resonanzkreis besteht aus einer Resonanzinduktivität L1 und zwei Kondensatoren C1, C2, in denen sich der Strom in zwei Pfade aufteilt.

Jeder Resonanzkondensator C1 bzw. C2 ist mit einer Gleichrichter-Schaltungsanordnung, bestehend aus den Dioden D3, D4 bzw. D5, D6 so verschaltet, dass eine bipolare Ausgangs-Gleichspannung mit +, GND, - vorhanden ist, wobei am Eingang eine unipolare Spannung mit +, - vorliegt. Weiterhin sind zu den Diodenpaaren D3, D4 und D5, D6 jeweils weitere Kondensatoren C7, C8 parallel geschaltet.

Die Schalter S1, S2 sind Halbleiterschalter.

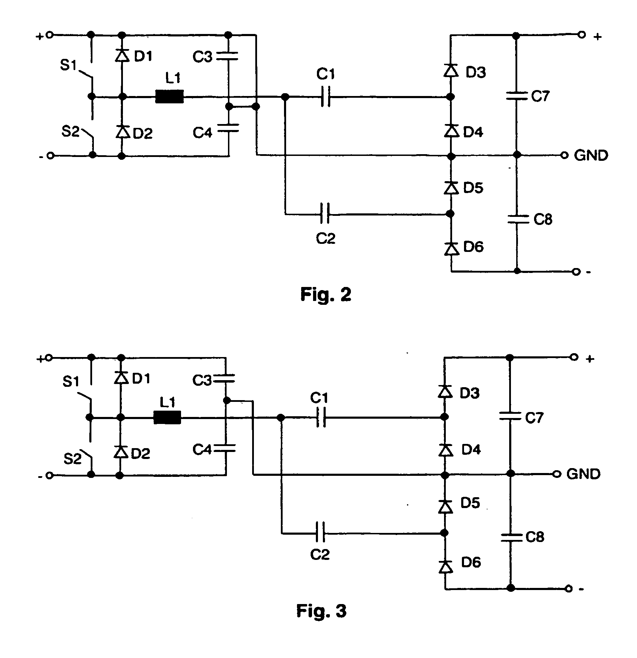

Die Figuren 2 und 3 zeigen Varianten der Grundschaltung mit geerdetem Pluspol bzw. ohne Generatorerdung.

In Fig. 2 ist der Pluspol der DC-Quelle geerdet. Der Kondensator C3 ist überbrückt und der Verknüpfungspunkt der beiden Kondensatoren C3, C4 ist mit GND verbunden.

Fig. 3 zeigt eine Variante ohne Erdung der DC-Quelle. Beide Kondensatoren C3, C4 sind wirksamer Bestandteil der Schaltung. Der Verknüpfungspunkt der beiden Kondensatoren C3, C4 ist mit GND verbunden.

Fig. 1b zeigt den zugehörigen Verlauf des Stroms durch die Resonanzinduktivität L1 sowie der Gate-Spannungen an den Halbbrückenschaltern S1 und S2.

Wie Fig. 1b veranschaulicht, ist ein sich wiederholendes Schaltmuster mit vier jeweils aufeinander folgenden Schaltzuständen möglich, und zwar:

    (1) S1 ein, S2 aus
    (2) S1 aus, S2 aus
    (3) S1 aus, S2 ein
    (4) S1 aus, S2 aus

Während des Zustands (1) fließt ein Strom durch den oberen Schalter S1 und die Induktivität L1. Am Verknüpfungspunkt der Induktivität L1 und den Kondensatoren C1 und C2 teilt sich der Strom in zwei Pfade auf. Es findet ein Stromfluss einerseits durch den oberen Kondensator C1 und die Diode D3 statt, der in eine Last fließt, die zwischen dem Ausgang (+) und Erde GND geschaltet ist. Der Kondensator C7 wird dabei geladen. Andererseits fließt ein Strom durch den unteren Kondensator C2 und die Diode D5 zum Erdungspol GND. Am Erdungspol GND addieren sich beide Ströme auf und fließen zurück über den Kondensator C3. Die Einschaltdauer des oberen Halbbrückenschalters S1 entspricht der halben Resonanz-Periodendauer, so dass der Schalter S1 nicht nur stromlos ein- sondern auch stromlos ausschaltet. Die Resonanz-Periodendauer $T_R$ ergibt sich aus:

$$T_R = 2\pi\sqrt{L_1(C_1 /\!/ C_2)}$$

Im Zustand (2) öffnet der obere Halbbrückenschalter S1 wieder. Da der Strom durch die Induktivität L1 sich infolge der Resonanz umkehrt, fließt nun ein Strom durch die Diode D1 und den Kondensator C3. Am Verknüpfungspunkt des Erdungspols GND teilt sich der Strom auf. Ein Teil fließt durch die Diode D4 und den Kondensator C1 sowie die Induktivität L1. Der andere Teil fließt durch die zwischen Erdungspol GND und (-) angeordnete Last über die Diode D6 und den unteren Kondensator C2 sowie die Induktivität L1. Der Kondensator C8 wird geladen. Die Dauer dieses Zustands entspricht ungefähr der halben Resonanz-Periodendauer $T_R$. Der Strom durch die Induktivität L1 fließt daher in Form einer Sinus-Halbwelle, hat aber umgekehrte Polarität im Vergleich zum Strom während des Zustands (1).

Im Zustand (3) ist der untere Schalter S2 geschlossen. Ein Strom fließt in gleicher Polarität wie im Zustand (2) durch den unteren Schalter S2. Am Verknüpfungspunkt des Erdungspols GND teilt sich der Strom auf, einerseits durch die Diode D4 und den Kondensator C1, andererseits durch die Last zwischen Erdungspol GND, (-), der Diode D6 und dem Kondensator C2. Der Strom fließt zurück durch die Induktivität L1. Der Kondensator C8 wird geladen. Die Einschaltdauer des unteren Schalters S2 entspricht der halben Resonanz-Perio-dendauer, so dass auch hier der Schalter S2 nicht nur stromlos ein- sondern auch stromlos ausschaltet.

Im Zustand (4) sind beide Schalter S1 und S2 geöffnet. Ein Strom fließt durch die Diode D2 und die Induktivität L1 und teilt sich dann auf, so dass der Strom durch den Kondensator C1 und die Diode D3 bzw. den Kondensator C2 und die Diode D5 fließt. Der Kondensator C7 wird dabei geladen. Der Strom durch die Induktivität L1 in Form einer Sinus-Halbwelle hat aber umgekehrte Polarität im Vergleich zum Strom während des Zustands (3).

Von Vorteil ist, dass die Schalter S1 und S2 stromlos und damit nahezu verlustfrei ein- und ausschalten. Durch die zwei Gleichrichter-Anordnungen am Ausgang wird die Eingangsspannung maximal verdoppelt, wenn man die Differenz zwischen positivem und negativem Ausgangspotenzial betrachtet. Durch das Zuschalten eines weiteren Gleichrichterpaares in Reihe zu dem vorhandenen Gleichrichterpaar mit jeweils den Dioden D3, D4 bzw. D5, D6 in Verbindung mit weiteren vorge-schalteten Resonanzkondensatoren kann die Eingangs-spannung weiter hochgesetzt werden. Weitere Gleichrichterpaare und Resonanzkondensatoren sind möglich. Ein stufenloses Einstellen der Ausgangsspannung unterhalb des Maximalwertes ist durch eine Veränderung der Schaltfrequenz möglich, die maximal der Resonanzfrequenz entspricht. Es stellt sich die Aufgabe, durch eine schaltungstechnische Maßnahme die Schaltung so zu verändern, dass auch Werte oberhalb der vorgenannten Maximalwerte stufenlos einstellbar werden.

Gemäß der Ausführungsform in Fig: 4a ist zwischen jeweils einer Resonanzkapazität C1, C2 und dem zugehörigen Gleichrichter, bestehend aus jeweils Dioden D3, D4 bzw. D5, D6, eine hochsetzende Schaltungsanordnung HA geschaltet. Diese hochsetzende Schaltungsanordnung ermöglicht ein gezieltes Überbrücken der nachgeschalteten Gleichrichter-Eingänge durch Schalter. Im bevorzugten Ausführungsbeispiel sind diese hochsetzenden Anordnungen dabei parallel zu mindestens einer der Gleichrichter-Dioden D3, D4 bzw. D5, D6 geschaltet, vorzugsweise ist jedoch die Anordnung eines Schalters S3 parallel zur Diode D4 und die Anordnung eines Schalters S4 parallel zur Diode D5 geschaltet.

Die Funktionsweise der hochsetzenden Anordnungen HA werden im Folgenden beschrieben.

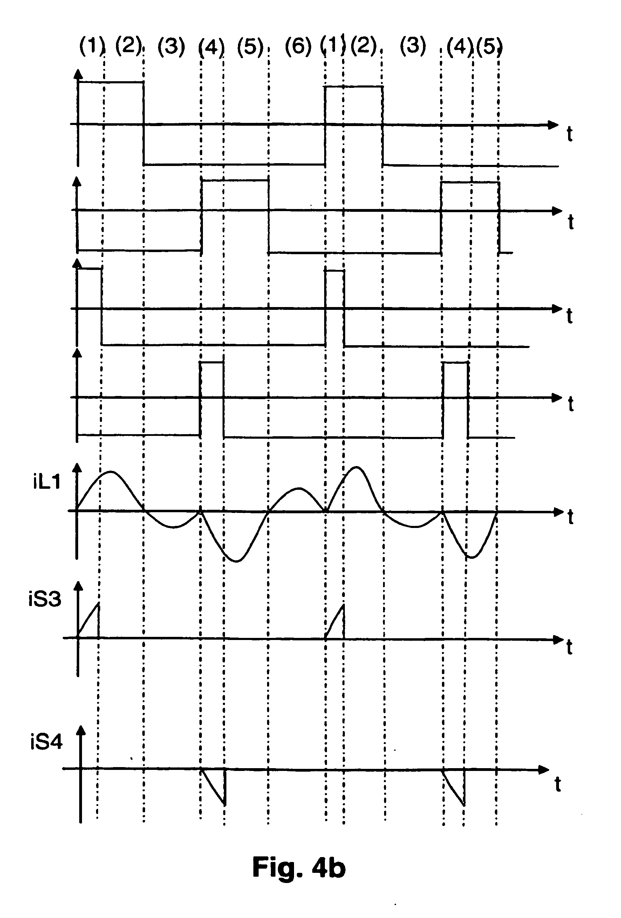

Fig. 4b zeigt die zugehörigen Verläufe der Gatespannungen UG_S1 bis UG_S4 an den Halbleiter-schaltern S1 bis S6 sowie des Stroms iL1 durch die Induktivität L1 sowie des Stroms iS3 durch den Schalter S3 bzw. des Stroms iS4 durch den Schalter S4 für hochsetzenden Betrieb. In Fig. 4b ist die Schaltfrequenz etwa gleich der halben Resonanzfrequenz des Schwingkreises.

Wenn der Schalter S1 eingeschaltet ist, kann gleichzeitig S3 für einen bestimmten Zeitraum eingeschaltet werden (Phase (1). Für den Ausgang des Schwingkreiswechselrichters wirkt dies als ein Kurzschluss der Eingänge des nachgeschalteten Gleichrichters. Dadurch kann die Induktivität des Schwingkreises kurzzeitig mit mehr Energie aufgeladen werden. Diese zusätzliche Energie gibt der Schwingkreis in der nachfolgenden Phase (2) über D3 an C7 ab. Phase (3) dient im Wesentlichen der spannungslosen Kommutierung des Schalters S3.

In den Phasen (4) bis (6) werden die Abläufe der Phasen (1) bis (3) für die andere Schaltergruppe S2 und S4 wiederholt. Das heißt, dass zunächst die Schalter S2 und S4 gleichzeitig in Phase (4) eingeschaltet werden. Die zusätzlich im Schwingkreis gespeicherte Energie wird danach im Wesentlichen in Phase (5) wieder abgegeben. Phase (6) dient im Wesentlichen dem spannungslosen Ausschalten von S2.

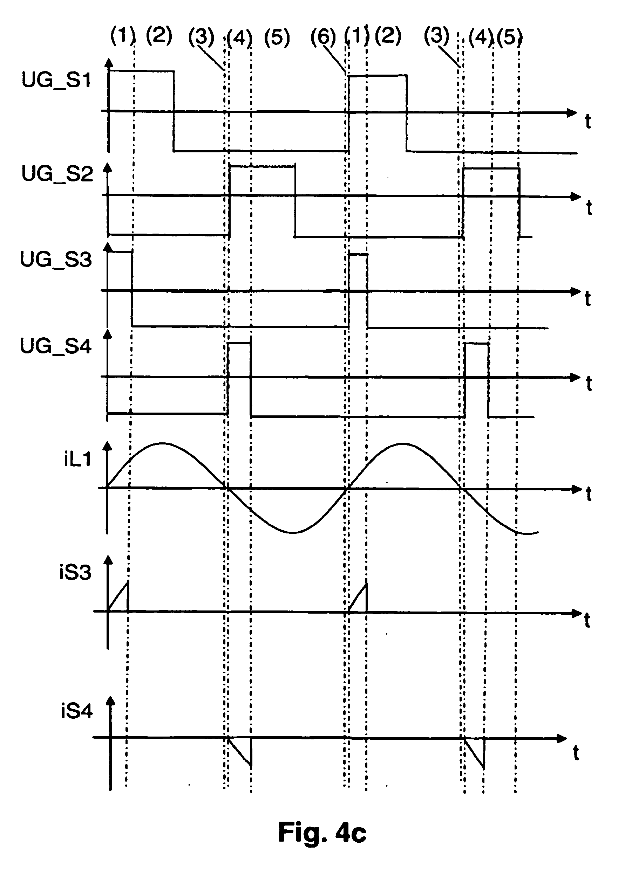

Da die Phasen (3) und (6) wenig zur Energieübertragung beitragen und vor allem der Schaltentlastung dienen, ist es naheliegend, diese Phase möglichst zu verkürzen. Weil die Schaltzeiten moderner Transistoren im Sub-Mikrosekundenbereich liegen, können diese Phasen entsprechend verkürzt werden. Dies kann durch eine erhöhte Schaltfrequenz der Schalter S1 und S2 erreicht werden. Als oberer Grenzwert gilt hier für die Schaltfrequenz die Resonanz- bzw. Eigenschwingfrequenz des Schwingkreises L1 und C1. Fig. 4c zeigt die Verhältnisse für diese Bedingungen. Die Phasendauer der Phasen (3) und (6) sind hier auf kurze Zeiträume zusammengeschrumpft. Diese Maßnahme dient der besseren Auslastung der Schalter und der Verringerung der Verluste in der Gesamtschaltung.

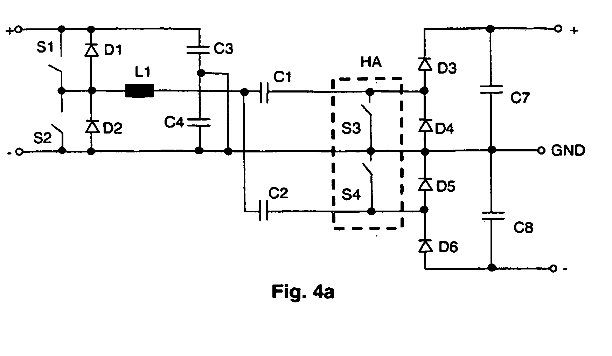

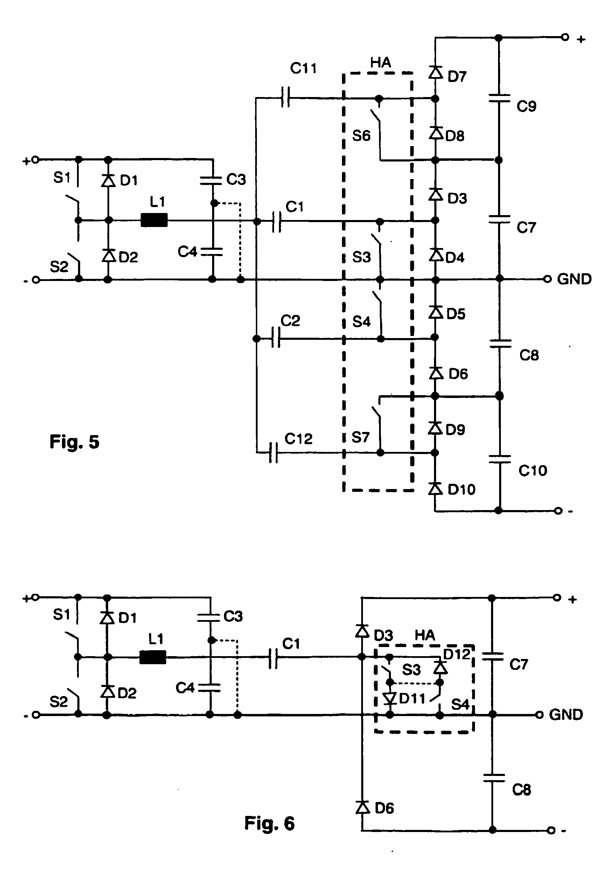

Fig. 5 zeigt eine weitere Ausführungsform (II) des erfindungsgemäßen DC/DC-Wandlers. Der Gleichrichter wurde hierbei um zwei weitere Gleichrichtereinheiten, die in Serie verschaltet sind, ergänzt. Dies verdoppelt die maximale Ausgangsspannung, wenn die hochsetzende Anordnung HA nicht in Betrieb ist. Die Funktionsabläufe sind so wie in Fig. 4, nur dass die Schalterpaare S3 und S6 sowie S4 und S7 jeweils gleichzeitig geschaltet werden.

Bei dieser Lösung sind vier an einem gemeinsamen Verknüpfungspunkt mit der Resonanzinduktivität L1 verbundene Resonanzkapazitäten C11, C1, C2, C12 vorhanden, denen jeweils ein Schalter S6, S3, S4, S7 zugeordnet ist. Am Ausgang sind acht Dioden D7, D8, D3, D4, D5, D6, D9 und D10 in Reihe geschaltet und vier Ausgangskondensatoren C9, C7, C8 und C10 vorhanden.

Der erste Schalter S6 liegt zwischen der Kapazität C11 und den Dioden D3, D8. Der zweite Schalter S3 liegt zwischen der Kapazität C1 und den Dioden D4, D5. Der dritte Schalter S6 liegt zwischen der Kapazität C2 und den Dioden D5, D6. Der vierte Schalter S7 liegt zwischen der Kapazität C12 und den Dioden D9, D10.

Fig. 6 zeigt eine dritte Ausführungsform (III) des erfindungsgemäßen DC/DC-Wandlers. Durch die im Vergleich zu Fig. 4a geänderte Ausführung des Gleichrichters am Ausgang ist hier ohne Aktivierung der hochsetzenden Anordnung HA nur die Hälfte der in Fig. 4a maximal erreichbaren Ausgangsspannung möglich. Die hochsetzende Anordnung HA besteht auch hier aus den Schaltern S3 und S4, die identisch zu der in Fig. 4b und Fig. 4c gezeigten Weise angesteuert werden. In der praktischen Ausführung werden diese Schalter S3 und S4 durch die Dioden D7 und D8 ergänzt, die eine Rückwärtsbelastung der Schalter verhindern.

Hierbei ist eine einzige Resonanzkapazität C1 vorhanden, die in Reihe mit der Resonanzinduktivität L1 liegt. Die spannungshochsetrende Schaltungsanordnung HA ist zwischen der Resonanzkapazität C1 und Erdungspol GND geschaltet, wobei die spannungshochsetzende Schaltungsanordnung HA aus zwei Schaltern S3, S4 mit in Reihe liegenden Dioden D11, D12 besteht.

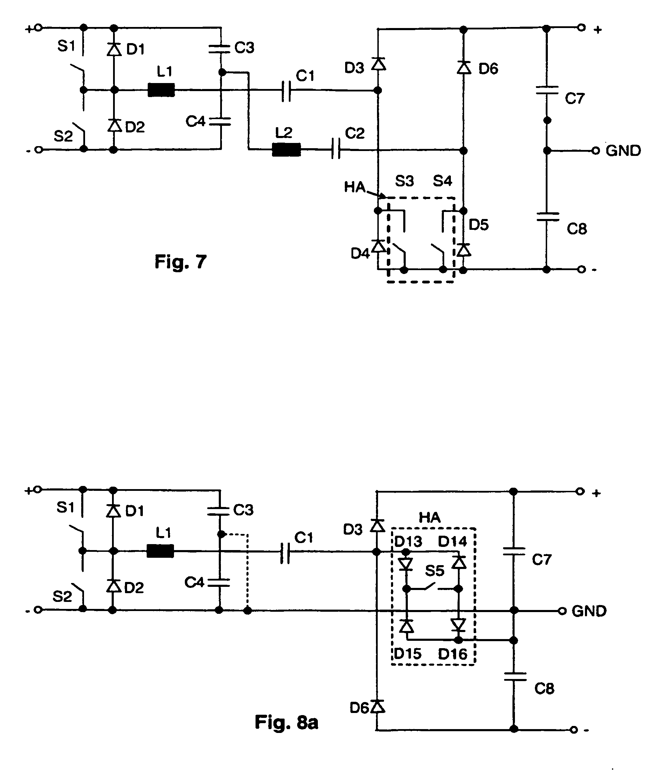

Eine weitere Ausführungsform (IV) zeigt Fig. 7. Die Übertragungseigenschaften gleichen denen der Ausführungsform in Fig. 6. Die Potenziale der Anschlüsse des DC-Ausgangs und des DC-Eingangs der Schaltung sind jedoch zueinander nicht fixiert wie in Fig. 4. Die hochsetzende Anordnung, mit der der gezielte Kurzschluss des Eingangs der Gleichrichterschaltung erreicht wird, ist hierbei mit den Schaltern S3 und S4 durch deren Parallelschaltung zu den Gleichrichterdioden D4 und D5 realisiert. Auch in diesem Fall erfolgt die Ansteuerung der Schalter identisch der in Fig. 4b,4c dargestellten Weise.

Der DC-Generator kann in diesem Fall beliebig mit GND verbunden werden, da er vom Gleichrichter mit hochsetzender Anordnung (HA) durch C1 und C2 sowie durch L1 und L2 sowohl gleichstrommäßig als auch wechselstrommäßig entkoppelt ist.

Die Schaltung umfasst eine erste Induktivität L1 mit einer in Reihe geschalteten Kapazität C1 und eine zweite Induktivität L2 mit einer in Reihe geschalteten Kapazität C2. Die spannungshochsetzende Schaltungsanordnung HA ist zwischen beiden Kapazitäten C1, C2 geschaltet.

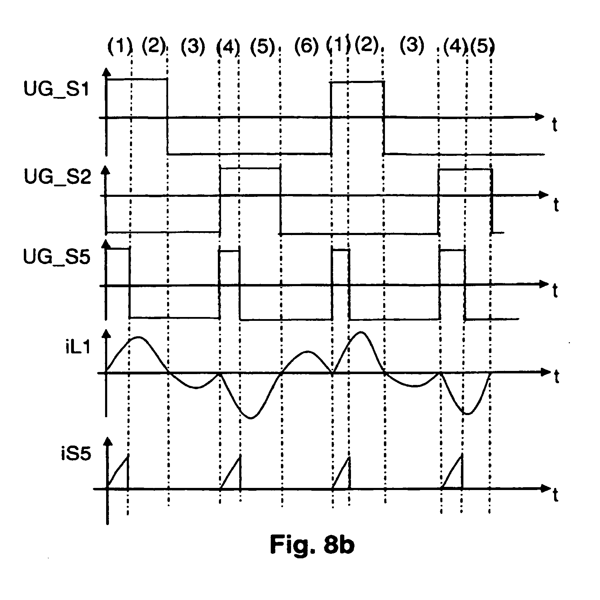

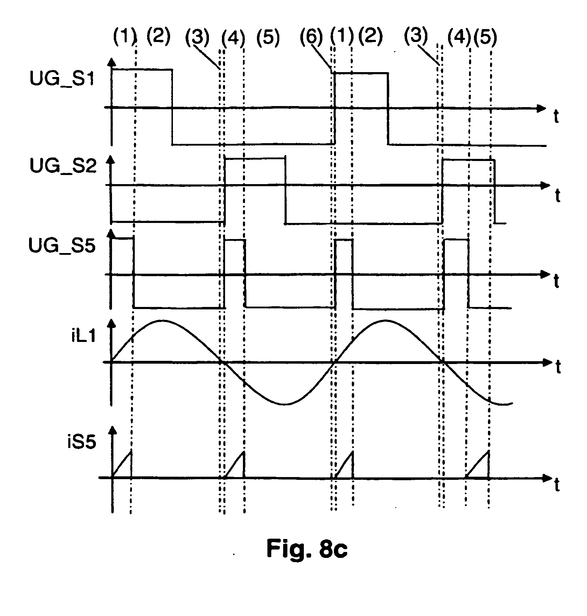

Fig. 8 zeigt eine weitere Ausgestaltungsform (V) der erfindungsgemäßen Anordnung. Die gezielten zeitweiligen Kurzschlüsse am Eingang des Gleichrichters werden in Fig. 8 durch einen bi-direktional wirkenden Schalter S5 in Verbindung mit den Dioden D13 bis D16 ausgeführt. S5 wird zu denselben Zeitpunkten eingeschaltet, wenn in den anderen Ausführungsvarianten (Fig. 4 bis 7) die Schalter S3 oder S4 eingeschaltet werden. Die Schalthäufigkeit von S5 ist daher doppelt so hoch wie die von S3 (Fig. 8b).

In diesem Fall umfasst die spannungshochsetzende Schaltungsanordnung HA einen einzigen Schalter S5, der jeweils zwischen zwei entgegengesetzt gerichteten Diodenpaaren D13, D15 und D14, D16 angeordnet ist, wobei die Diodenpaare an einem gemeinsamen Verknüpfungspunkt sowohl mit der Resonanzkapazität C1 als auch mit der Gleichrichter-Schaltungsanordnung D3, D6 verbunden sind und an ihrem anderen gemeinsamen Verknüpfungspunkt mit Erdungspol GND verbunden sind.

Im Vergleich zu der in Fig. 1a gezeigten Grundschaltung sind in die erfindungsgemäßen Schaltungsanordnungen nun zwei zusätzliche Schaltvorgänge eingefügt. Wenn der Schalter S1 bzw. S2 geschlossen ist, ist für einen bestimmten Zeitraum auch der Schalter S3 bzw. S4 (bzw. im Ausführungsbeispiel 8 jeweils der Schalter S5) geschlossen. Der Schalter S3 öffnet jedoch wieder, während der Schalter S1 noch geschlossen ist. Die Schaltzustände (1) und (4) sind somit die Zustände, in denen wie bei einem klassischen Hochsetzsteller Energie in der Hochsetzsteller-Induktivität zwischengespeichert wird. Die Hochsetzsteller-Induktivität ist hier die Resonanz-Induktivität L1. Die Schaltzustände (1) und (4) werden hier als hochsetzende Schaltzustände bezeichnet.

Arbeitet der DC/DC-Wandler nicht im hochsetzenden Betrieb, werden die Schalter S3,S4 nicht geschlossen. Dann erfolgen nur die Schaltzustände (2), (3), (4) und (5).

Im Zustand (1) findet ein Stromfluss durch den Schalter S1 und die Induktivität L1 statt. Dann teilt sich der Strom, so dass ein Teilstrom einerseits durch den Kondensator C1, den Schalter S3 und zum Erdungspol GND fließt und anderseits ein Teilstrom durch den Kondensator C2, die Diode D5 zum Erdungspol GND fließt. Dann findet ein Stromzusammenfluss am Erdungspol GND und ein Stromfluss durch den Kondensator C3 statt. Hierbei wird Energie in der Induktivität L1 gespeichert und keine Energie an die Last abgegeben.

Im Zustand (2) findet ein Stromfluss durch den Schalter S1 und die Induktivität L1 statt. Der Strom teilt sich dann auf, so dass einerseits ein Teilstrom durch den Kondensator C1, die Diode D3 und die Last, die zwischen (+) und Erdungspol GND liegt, fließt, so dass der Kondensator C7 geladen wird, und dass anderseits ein Teilstrom durch den Kondensator C2 und die Diode D5 zur Erde GND fließt. Es findet ein Zusammenfluss am Erdungspol GND und ein Stromfluss durch C3 statt. In diesem Zustand gibt die Induktivität L1 die in Zustand (1) gespeicherte zusätzliche Energie an die Last. Daher liegt eine höhere Spannung am Ausgang, d.h. an der Last zwischen (+) und Erdungspol GND.

Im Zustand (3) findet ein Stromfluss durch die Diode D1 und den Kondensator C3 statt. Es folgt eine Aufteilung des Stroms, so dass einerseits ein Teilstrom durch die Diode D4 und den Kondensator C1 fließt und anderseits ein Teilstrom zu der zwischen Erdungspol GND und (+) angeschlossene Last fließt. Der Kondensator C8 wird dann geladen. Es entsteht ein Stromzusammenfluss der beiden Ströme am Verknüpfungspunkt der Kondensatoren C1, C2 und der Induktivität, wobei ein Strom durch die Induktivität L1 fließt.

Im Zustand (4) findet ein Stromfluss durch den Schalter S2 statt, so dass einerseits ein Strom durch die Diode D4 und den Kondensator C1 fließt und andererseits ein Teilstrom durch den Schalter S4 und den Kondensator C2 fließt. Ein Zusammenfluss der beiden Ströme findet am Verknüpfungspunkt der Kondensatoren C1. C2 und der Induktivität L1 statt. Ein Strom fließt durch die Induktivität L1 zum Schalter S2. In diesem Zustand wird wieder Energie in der Induktivität L1 gespeichert. Eine Energieabgabe an die Last findet nicht statt.

Im Zustand (5) fließt ein Strom durch den Schalter S2. Dann folgt eine Aufteilung des Stroms, so dass einerseits Strom von den Erdungspol GND durch die Diode D4 un den Kondensator C1 fließt und andererseits Strom von dem Erdungspol GND durch die zwischen Erdungspol GND und (-) angeschlossene Last durch die Diode D6 und den Kondensator C2 fließt. Der Kondensator C8 wird geladen. Der Zusammenfluss der beiden Ströme findet am Verknüpfungspunkt der Kondensatoren C1, C2 und der Induktivität L1 statt, wobei Strom durch die Induktivität L1 zum Schalter S2 fließt. In diesem Zustand gibt die Induktivität L1 die in Zustand (4) gespeicherte Energie an die Last ab, so dass eine höhere Spannung am Ausgang, d.h. an der Last zwischen (+) und Erdungspol GND vorhanden ist.

Im Zustand (6) findet ein Stromfluss durch die Diode D2 und die Induktivität L1 statt. Dann folgt eine Aufteilung des Stroms, so dass einerseits ein Strom durch den Kondensator C1, die Diode D3 und die zwischen (+) und Erdungspol GND vorhandene Last fließt, wobei der Kondensator C7 geladen wird, und andererseits ein Strom durch den Kondensator C2 und die Diode D5 fließt. Es folgt ein Zusammenfluss am Erdungspol GND und ein Stromfluss weiter durch die Diode D2.

Die Ausführungsbeispiele Fig.5 bis 8 weisen prinzipiell dieselben Funktionsmerkmale und Schaltphasen auf und wurden deshalb in der vorliegenden Erfindungsbeschreibung zusammengefasst. Die beschriebenen Schaltphasen treten bei allen Ausführungsbeispielen gleichermaßen auf und unterscheiden sich hinsichtlich der technischen Realisierung nur durch die unterschiedlichen Arten der angeschlossenen Gleichrichter am Ausgang der Schaltung. Die Beschreibung der Schaltphasen gilt daher auch für die Ausführungsbeispiele 5 bis 7.

Die in Fig. 8 dargestellte Ausführungsvariante unterscheidet sich nur dadurch, dass zum Kurzschluss des nachgeschalteten Gleichrichters ein bi-direktional wirkender Schalter eingesetzt wird, der dann doppelt so häufig schaltet wie in den vorgenannten Varianten Fig.4 bis 7. Entsprechende Signalverläufe sind in Fig. 8b dargestellt.

## Patentansprüche

1. Transformatorloser resonant betriebener DC/DC-Wandler zum Umwandeln einer unipolaren Eingangs-Gleichspannung mit einem zugeordneten Pluspol (+) und einem Minuspol (-) in eine bipolare Ausgangs-Gleichspannung mit einem zugeordneten Pluspol (+), einem Erdungspol (GND) und einem Minuspol (-),

   - mit einer eingangsseitigen Halbbrückenschaltung,
   - mit einem mindestens eine Resonanzinduktivität (L1) und wenigstens eine Resonanzkapazität (C1, C2) umfassenden Resonanzkreis,
   - wobei jede Resonanzkapazität (C1, C2) mit jeweils einer ausgangsseitigen Gleichrichter-Schaltungsanordnung (D3; D4; D5; D6) so verschaltet ist, dass die bipolare Ausgangs-Gleichspannung vorhanden ist,
   - wobei mit jeder Resonanzkapazität (C1; C2) ein ansteuerbarer Hochsetzschalter (S3, S4, S5, S6, S7) derart verbunden ist, dass im angesteuerten Zustand des Hochsetzschalters (S3, S4, S5, S6, S7) dieser die Resonanzinduktivität (L1) mit einer zusätzlichen Energie auflädt.

2. DC/DC-Wandler nach Anspruch 1,
   **dadurch gekennzeichnet,**
   **dass** der Hochsetzschalter (S3, S4, S5) zwischen einer der Resonanzinduktivität (L1) abgewandten Elektrode der Resonanzkapazität (C1, C2) und dem Erdungspol (GND) angeordnet ist.

3. DC/DC-Wandler nach Anspruch 1 oder 2,
   **dadurch gekennzeichnet,**
   **dass** mindestens zwei Resonanzkapazitäten (C1, C2) vorhanden sind, die an einem gemeinsamen Verknüpfungspunkt mit der Resonanzinduktivität (L1) verbunden sind.

4. DC/DC-Wandler nach einem der vorstehenden Ansprüche,
   **dadurch gekennzeichnet,**

**dass** der Hochsetzschalter (S3, S4, S5, S6) zwischen den Resonanzkapazitäten (C1, C2) und der Gleichrichter-Schaltungsanordnung (D3, D4, D5, D6) angeordnet ist.

5. DC/DC-Wandler nach Anspruch 3,
   **dadurch gekennzeichnet,**
   **dass** zwei Resonanzkapazitäten (C1, C2) zwei entgegengesetzt geschaltete Hochsetzschalter (S3, S4; S6, S7) mit antiparallelen Dioden (D4, D5; D8, D9) zugeordnet sind.

6. DC/DC-Wandler nach Anspruch 4,
   **dadurch gekennzeichnet,**
   **dass** zwei der Dioden (D4, D5) der Gleichrichter-Schaltungsanordnung (D3; D4; D5; D6) antiparallel zu jeweils den Dioden (D4, D5) zugeordneten Hochsetzschaltern (S3, S4) angeordnet sind.

7. DC/DC-Wandler nach Anspruch 5,
   **dadurch gekennzeichnet,**
   **dass** die Hochsetzschalter (S3, S4; S6, S7) durch Schließen abwechselnd aktivierbar sind, wobei Teilresonanzkreise durch Schließen der abwechselnd aktivierbaren Hochsetzschalter (S3-S6) kurzgeschlossen werden.

8. DC/DC-Wandler nach Anspruch 1,
   **dadurch gekennzeichnet,**
   **dass** vier an einem gemeinsamen Verknüpfungspunkt mit der Resonanzinduktivität (L1) verbundene Resonanzkapazitäten (C11, C1, C2, C12) vorhanden sind, denen jeweils ein Hochsetzschalter (S6, S3, S4, S7) zugeordnet ist.

9. DC/DC-Wandler nach Anspruch 1,
   **gekennzeichnet durch**
   eine erste Induktivität (L1) mit einer in Reihe geschalteten ersten Resonanzkapazität (C1) und eine zweite Induktivität (L2) mit einer in Reihe geschalteten zweiten Resonanzkapazität (C2), wobei der Hochsetzschalter (S3, S4) zwischen beiden Resonanzkapazitäten (C1, C2) angeordnet ist.

10. DC/DC-Wandler nach Anspruch 9,
    **dadurch gekennzeichnet,**
    **dass** die der ersten Resonanzkapazität (C1) und der zweiten Resonanzkapazität (C2) zugeordneten Hochsetzschalter (S3, S4) parallel zu einer Diode (D4, D5) der Gleichrichter-Schaltungsanordnung (D3, D4, D5, D6) angeordnet sind.

11. DC/DC-Wandler nach einem der Ansprüche 1 oder 2,
    **dadurch gekennzeichnet,**
    **dass** eine einzige Resonanzkapazität (C1) vorhanden ist, die in Reihe mit der Resonanzinduktivität (L1) liegt.

12. DC/DC-Wandler nach Anspruch 11,
    **dadurch gekennzeichnet, dass** der Hochsetzschaiter (S5) zwischen zwei entgegengesetzt gerichteten Diodenpaaren (D13, D15 und D14, D16) angeordnet ist, wobei die Diodenpaare an einem gemeinsamen Verknüpfungspunkt sowohl mit der Resonanzkapazität (C1) als auch mit der Gleichrichter-Schaltungsanordnung (D3, D6) verbunden sind und an ihrem anderen gemeinsamen Verknüpfungspunkt mit dem Erdungspol (GND) verbunden sind.

13. DC/DC-Wandler nach einem der vorhergehenden Ansprüche,
    **dadurch gekennzeichnet,**
    **dass** der Hochsetzschalter (S3, S4, S5, S6) nur dann aktiviert wird, wenn die Eingangsspannung des DC/DC-Wandlers einen festgelegten Wert unterschreitet.

14. DC/DC-Wandler nach einem der vorhergehenden Ansprüche,
    **dadurch gekennzeichnet,**
    **dass** die Halbbrückenschaltung zwei Halbbrückenschalter (S1, S2) umfasst.

15. DC/DC-Wandler nach einem der vorhergehenden Ansprüche,
    **dadurch gekennzeichnet,**
    **dass** einer der Eingangspole (+, -) mit dem Erdungspol (GND) verbunden ist.

16. DC/DC-Wandler nach einem der Ansprüche 1 - 14,
    **dadurch gekennzeichnet,**
    **dass** keiner der Eingangspole (+, -) mit dem Erdungspol (GND) verbunden ist.

17. Verwendung eines DC/DC-Wandlers nach einem der vorhergehenden Ansprüche
    in einem Wechselrichter zur Umwandlung einer Gleichspannung in eine netzkonforme Wechselspannung.

18. Verwendung eines DC/DC-Wandlers nach Anspruch 17 in einem Photovoltaikwechselrichter zur Umwandlung einer Photovoltaikspannung in eine netzkonforme Wechselspannung.

**Claims**

1. A transformerless resonantly operated DC/DC converter for conversion of a unipolar input DC voltage with an associated positive pole (+) and with a negative pole (-) into a bipolar output DC voltage with an associated positive pole (+), a ground pole (GND) and a negative pole (-),

   - with a half-bridge circuit at a converter input sid,

- with a resonance circuit comprising at least one resonance inductance (L1) and at least one resonance capacitance (C1, C2),
- wherein each resonance capacitance (C1, C2) is connected to a respective rectifier circuit arrangement (D3; D4; D5; D6) at a converter output side in such a manner that the bipolar output direct voltage is provided,
- wherein an actuatable boosting switch (S3, S4, S5, S6, S7) is connected to each resonance capacitance (C1; C2) in such a manner that the boosting switch (S3, S4, S5, S6, S7), when actuated, charges the resonance inductance (L1) with an additional energy.

2. The DC/DC converter according to claim 1, **characterised in** **that** the boosting switch (S3, S4, S5) is arranged between an electrode of the resonance capacitance (C1, C2) opposite to the resonance inductance (L1), and the ground pole (GND).

3. The DC/DC converter according to claim 1 or 2, **characterised in** **that** at least two resonance capacitances (C1, C2) are provided, which are connected to the resonance inductance (L1) at a common node.

4. The DC/DC converter according to anyone of the previous claims, **characterised in** **that** the boosting switch (S3, S4, S5, S6) is arranged between the resonance capacitances (C1, C2) and the rectifier circuit arrangement (D3, D4, D5, D6).

5. The DC/DC converter according to claim 3, **characterised in** **that** two resonance capacitances (C1, C2) are associated with two oppositely connected boosting switches (S3, S4; S6, S7) with anti-parallel diodes (D4, D5; D8, D9).

6. The DC/DC converter according to claim 4, **characterised in** **that** two of the diodes (D4, D5) of the rectifier circuit arrangement (D3; D4; D5; D6) are disposed in anti-parallel arrangement to boosting switches (S3, S4) respectively associated with the diodes (D4, D5).

7. The DC/DC converter according to claim 5, **characterised in** **that** the boosting switches (S3, S4; S6, S7) are alternately operable, wherein parts of theresonance circuit are short-circuited by closing the alternately operable boosting switches (S3 - S6).

8. The DC/DC converter according to claim 1, **characterised in**

**that** four resonance capacitances (C11, C1, C2, C12), which are connected to the resonance inductance (L1) at a common node, are provided, a respective boosting switch (S6, S3, S4, S7) being associated with each resonance capacitance.

9. The DC/DC converter according to claim 1, **characterised by** a first inductance (L1) with a first series-connected resonance capacitance (C1) and by a second inductance (L2) with a second series-connected resonance capacitance (C2), wherein the boosting switch (S3, S4) is arranged between the two resonance capacitances (C1, C2).

10. The DC/DC converter according to claim 9, **characterised in** **that** the boosting switches (S3, S4) associated with the first resonance capacitance (C1) and with the second resonance capacitance (C2) are arranged parallel to a diode (D4, D5) of the rectifier circuit arrangement (D3, D4, D5, D6).

11. The DC/DC converter according to one of claims 1 or 2, **characterised in** **that** a single resonance capacitance (C1) series-connected to the resonance inductance (L1) is provided.

12. The DC/DC converter according to claim 11, **characterised in** **that** the boosting switch (S5) is arranged between two antiparallel diode pairs (D13, D15 and D14, 16), wherein the diode pairs are connected at a common node both to the resonance capacitance (C1) and to the rectifier circuit arrangement (D3, D6), and are connected at their other common node to the ground pole (GND).

13. The DC/DC converter according to anyone of the previous claims, **characterised in** **that** the boosting switch (S3, S4, S5, S6) is only activated in case the input voltage of the DC/DC converter falls below a predetermined value.

14. The DC/DC converter according to anyone of the previous claims, **characterised in** **that** the half-bridge circuit comprises two half-bridge switches (S1, S2).

15. The DC/DC converter according to anyone of the previous claims, **characterised in** **that** one of the input poles (+, -) is connected to the ground pole (GND).

16. The DC/DC converter according to anyone of the claims 1 to 14,
**characterised in
that** none of the input poles (+, -) is connected to the ground pole (GND).

17. Use of a DC/DC converter according to anyone of the previous claims
in an inverter for converting a DC voltage into a grid-compliant AC voltage.

18. Use of a DC/DC converter according to claim 17 in a photovoltaic inverter for conversion of a photovoltaic voltage into a grid-compliant alternating voltage.

**Revendications**

1. Convertisseur continu-continu DC-DC à résonance sans transformateur pour convertir une tension continue d'entrée unipolaire à laquelle sont associés un pôle plus (+) et un pôle moins (-) en une tension continue de sortie bipolaire à laquelle sont associés un pôle plus (+), un pôle de terre (GND) et un pôle moins (-),

- avec un circuit côté entrée en demi-pont ,
- avec aussi un circuit résonant qui comprend au moins une inductance de résonance (L1) et au moins une capacité de résonance (C1, C2),
- dans lequel chaque capacité de résonance (C1, C2) est interconnectée respectivement côté sortie avec un circuit redresseur (D3; D4; D5; D6) afin que la tension continue de sortie bipolaire soit disponible,
- dans lequel un interrupteur de survoltage commandable (S3, S4, S5, S6, S7) est relié à chaque capacité de résonance (C1 ; C2), afin que, dans l'état commandé de l'interrupteur de survoltage (S3, S4, S5, S6, S7), ce dernier charge l'inductance de résonance (L1) avec un supplément d'énergie.

2. Convertisseur DC-DC selon la revendication 1,
**caractérisé en ce que**
l'interrupteur de survoltage (S3, S4, S5) est disposé entre une électrode de la capacité de résonance (C1, C2) qui est éloignée de l'inductance de résonance (L1) et le pôle de terre (GND).

3. Convertisseur DC-DC selon la revendication 1 ou 2,
**caractérisé en ce que**
il est prévu au moins deux capacités de résonance (C1, C2) qui sont reliées à l'inductance de résonance (L1) à un point de jonction commun.

4. Convertisseur DC-DC selon l'une des revendications précédentes,

**caractérisé en ce que**
l'interrupteur de survoltage (S3, S4, S5, S6) est disposé entre les capacités de résonance (C1, C2) et le circuit redresseur (D3, D4, D5, D6).

5. Convertisseur DC-DC selon la revendication 3,
**caractérisé en ce que**
deux interrupteurs de survoltage (S3, S4, S6, S7) connectés en opposition et avec des diodes antiparallèles (D4, D5 ; D8, D9), sont associés à deux capacités de résonance (C1, C2).

6. Convertisseur DC-DC selon la revendication 4,
**caractériséen ce que**
deux des diodes (D4, D5) du circuit redresseur (D3; D4; D5; D6) sont disposées en antiparallèle respectivement par rapport aux 'interrupteurs de survoltage (S3, S4) associés aux diodes (D4, D5).

7. Convertisseur DC-DC selon la revendication 5,
**caractérisé en ce que**
les interrupteurs de survoltage (S3, S4 ; S6, S7) peuvent être activés en alternance par fermeture, les circuits résonants étant alors court-circuités par la fermeture des interrupteurs de survoltage (S3-S6) qui peuvent être activés en alternance.

8. Convertisseur DC-DC selon la revendication 1,
**caractérisé en ce que**
il est prévu quatre capacités de résonance (C11, C1, C2, C12) reliées à l'inductance de résonance (L1) à un point de jonction commun, et à chacune desquelles est associé respectivement un interrupteur de survoltage (S6, S3, S4, S7).

9. Convertisseur DC-DC selon la revendication 1,
**caractérisé par**
une première inductance (L1) ayant une première capacité de résonance (C1) connectée en série et une deuxième inductance (L2) ayant une deuxième capacité de résonance (C2) connectée en série, l'interrupteur de survoltage (S3, S4) étant disposé entre les deux capacités de résonance (C1, C2).

10. Convertisseur DC-DC selon la revendication 9,
**caractérisé en ce que**
l'interrupteur de survoltage (S3, S4) associé à la première capacité de résonance (C1) et à la deuxième capacité de résonance (C2) est disposé en parallèle avec une diode (D4, D5) du circuit redresseur (D3, D4, D5, D6).

11. Convertisseur DC-DC selon l'une des revendications 1 ou 2,
**caractérisé en ce que**
il est prévu une seule capacité de résonance (C1) qui est en série avec l'inductance de résonance (L1).

**12.** Convertisseur DC-DC selon la revendication 11, **caractérisé en ce que** l'interrupteur de survoltage (S5) est disposé entre deux paires de diodes (D13, D15 et D14, D16) montées en opposition, les paires de diodes étant reliées, à un point de jonction commun, aussi bien à la capacité de résonance (C1) qu'au circuit redresseur (D3, D6) et étant reliées au pôle de terre (GND) à leur autre point de jonction commun.

**13.** Convertisseur DC-DC selon l'une des revendications précédentes, **caractérisé en ce que** l'interrupteur de survoltage (S3, S4, S5, S6) est activé uniquement lorsque la tension d'entrée du convertisseur DC-DC devient inférieure à une valeur définie.

**14.** Convertisseur DC-DC selon l'une des revendications précédentes, **caractérisé en ce que** le circuit en demi-pont comprend deux commutateurs en demi-pont (S1, S2).

**15.** Convertisseur DC-DC selon l'une des revendications précédentes, **caractérisé en ce que** un des pôles d'entrée (+, -) est connecté au pôle de terre (GND).

**16.** Convertisseur DC-DC selon l'une des revendications 1 à 14, **caractérisé en ce que** aucun des pôles d'entrée (+,-) n'est connecté au pôle de terre (GND).

**17.** Utilisation d'un convertisseur DC-DC selon l'une des revendications précédentes dans un onduleur pour convertir une tension continue en une tension alternative conforme au réseau.

**18.** Utilisation d'un convertisseur DC-DC selon la revendication 17 dans un onduleur photovoltaïque pour convertir une tension photovoltaïque en une tension alternative conforme au réseau.

**Fig. 1a**

**Fig.1b**

**Fig. 2**

**Fig. 3**

**Fig. 4a**

(1) (2) (3) (4) (5) (6) (1) (2) (3) (4) (5)

iL1

iS3

iS4

**Fig. 4b**

**Fig. 4c**

**Fig. 5**

**Fig. 6**

Fig. 7

Fig. 8a

**Fig. 8b**

Fig. 8c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102004037446 B4

- EP 1369985 A

### In der Beschreibung aufgeführte Nicht-Patentliteratur

- **KLAASSENS J B.** Power Conditioning with a Switched Series-Resonant Circuit Operating at a High Internal Frequency. *TELECOMMUNICATIONS ENERGY CONFERENCE, 1987. INTELEC '87. THE NINTH INTERNATIONAL,* 14. Juni 1987, 193-203